# EUROPÄISCHE PATENTSCHRIFT

(11) **EP 4 107 337 B1**
(45) Veröffentlichungstag und Bekanntmachung des Hinweises auf die Patenterteilung: **25.09.2024**
(21) Anmeldenummer: 21705491.5
(22) Anmeldetag: 12.02.2021
(51) Int. Cl.: E03C 1/04

(54) **SANITÄRARMATUR SOWIE VERFAHREN ZUR MONTAGE EINER DERARTIGEN SANITÄRARMATUR**
SANITARY FITTING, AND METHOD FOR MOUNTING SUCH A SANITARY FITTING
APPAREIL DE PLOMBERIE, ET PROCÉDÉ DE MONTAGE D'UN TEL APPAREIL DE PLOMBERIE

(30) Priorität: 20.02.2020 DE 102020104457
(43) Veröffentlichungstag der Anmeldung: 28.12.2022
(73) Patentinhaber: Grohe AG, 58675 Hemer (DE)
(72) Erfinder: PHILIPPS, Hartwig, 58706 Menden (DE); SCHADOW, Pia, 58675 Hemer (DE)
(86) Internationale Anmeldenummer: PCT/EP2021/053460
(87) Internationale Veröffentlichungsnummer: WO 2021/165153

(56) Entgegenhaltungen:
- EP-A1- 2 108 748
- DE-A1- 102011 076 829
- GB-A- 2 461 139

## Beschreibung

Die vorliegende Erfindung betrifft eine Sanitärarmatur gemäß Anspruch 1, die insbesondere für Waschbecken, Duschen und/oder Badewannen verwendbar ist. Zudem betrifft die vorliegende Erfindung ein Verfahren gemäß Anspruch 9 zur Montage einer entsprechenden Sanitärarmatur.

Sanitärarmaturen dienen insbesondere der Bereitstellung von Wasser und/oder dem Mischen eines Kaltwassers und Warmwassers zu einem Mischwasser mit einer gewünschten Mischwassertemperatur sowie der Dosierung des gemischten Mischwassers. Bei bekannten Sanitärarmaturen wird das Wasser von einem Ventil oder das Mischwasser von einem Mischventil über Flüssigkeitskanäle in einem Armaturengehäuse zu einer Auslauföffnung eines Auslaufs des Armaturengehäuses geleitet. Da das Wasser dabei mit dem Armaturengehäuse in Kontakt steht, müssen Armaturengehäuse aus einem für Trinkwasser geeignetem Material, wie zum Beispiel Messing, bestehen. Um kostengünstigere Materialien, wie zum Beispiel Zink oder Zinklegierungen, für Armaturengehäuse verwenden zu können, müssen die Flüssigkeitskanäle innerhalb des Armaturengehäuses beispielsweise in Form von Kunststoffwasserführungen ausgebildet werden, sodass das Mischwasser nicht mit dem Armaturengehäuse in Kontakt kommt. Dies ist beispielsweise aus DE 10 2011 076 829 A1, GB 2461139 A und EP 2 108 748 A1 bekannt. Problematisch ist hierbei insbesondere die Größe und die Position einer Verbindung zwischen einer Wasserführung des Auslaufs mit einem Ventilgehäuse des Ventils bzw. einem Ventiladapter des Ventils bzw. des Mischventils der Sanitärarmatur, weil die Verbindung entweder eine Vergrößerung eines Durchmessers des Armaturengehäuses oder eine mehrteilige Ausgestaltung des Armaturengehäuses erfordert.

Aufgabe der Erfindung ist es daher, die mit Bezug auf den Stand der Technik geschilderten Probleme zumindest teilweise zu lösen und insbesondere eine Sanitärarmatur anzugeben, bei der eine Verbindung zwischen der Wasserführung des Auslaufs und einem Ventiladapter des Ventils derart ausgebildet ist, dass ein einteiliges Armaturengehäuse ohne Vergrößerung des Gehäusedurchmessers verwendbar ist. Zudem soll auch ein Verfahren zur Montage einer Sanitärarmatur angegeben werden, bei dem eine Verbindung zwischen der Wasserführung des Auslaufs und einem Ventiladapter des Ventils derart ausgebildet wird, dass ein einteiliges Armaturengehäuse ohne Vergrößerung des Gehäusedurchmessers verwendbar ist.

Diese Aufgaben werden gelöst mit einer Sanitärarmatur und einem Verfahren gemäß den Merkmalen der unabhängigen Patentansprüche. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest die folgenden Komponenten aufweist:
- ein Armaturengehäuse mit einem eine Auslauföffnung aufweisenden Auslauf;
- einen Ventiladapter, der in dem Armaturengehäuse angeordnet ist;
- ein Ventil zum zumindest teilweisen Absperren der Auslauföffnung, das zumindest teilweise in dem Ventiladapter angeordnet ist; und
- ein Verbindungselement zum Verbinden einer in dem Auslauf angeordneten Wasserführung mit einer Wasseröffnung des Ventiladapters, wobei das Verbindungselement mittels einer Lineargleitführung an dem Ventiladapter befestigt ist.

Die vorgeschlagene Sanitärarmatur dient insbesondere der Bereitstellung von Wasser, dem Mischen eines Kaltwassers und Warmwassers zu einem Mischwasser mit einer gewünschten Mischwassertemperatur und/oder der Dosierung des gemischten Mischwassers. Solche Sanitärarmaturen werden regelmäßig für Spülbecken, Waschbecken, Duschen und/oder Badewannen verwendet. Die Sanitärarmatur weist ein Armaturengehäuse mit einem eine Auslauföffnung aufweisenden Auslauf auf, wobei das Armaturengehäuse zumindest teilweise aus Messing, einer Zinklegierung und/oder Kunststoff bestehen kann. Das Armaturengehäuse ist insbesondere einteilig ausgebildet, d. h insbesondere nicht aus zwei (Halb-)Schalen zusammengesetzt. Weiterhin ist das Armaturengehäuse an einem Träger, beispielsweise einer Arbeitsplatte, dem Spülbecken, dem Waschbecken, der Dusche oder der Badewanne, befestigbar. Weiterhin weist das Armaturengehäuse einen (hervorstehenden bzw. abzweigenden) Auslauf auf, der starr oder bewegbar mit dem Armaturengehäuse verbunden ist. Der Auslauf kann zumindest teilweise rohrförmig ausgebildet sein. Weiterhin kann das Armaturengehäuse eine dekorative äußere Oberfläche aufweisen. Weiterhin weist der Auslauf eine Auslauföffnung auf, über die eine Flüssigkeit, insbesondere (Misch-)Wasser, abgebbar ist.

In dem Armaturengehäuse ist ein Ventiladapter zur Aufnahme und/oder Befestigung eines Ventils an dem Armaturengehäuse angeordnet. Der Ventiladapter ist insbesondere nach Art eines Kartuschenadapters ausgebildet. Zudem kann der Ventiladapter zumindest teilweise rohrförmig ausgebildet sein, sodass das Ventil zumindest teilweise in dem Ventiladapter anordenbar ist. Der rohrförmige Bereich des Ventiladapters erstreckt sich insbesondere entlang einer Längsachse. Weiterhin kann der Ventiladapter zumindest teilweise aus Messing und/oder Kunststoff bestehen. Der Ventiladapter kann direkt oder indirekt, beispielsweise durch weitere Komponenten der Sanitärarmatur, an dem Armaturengehäuse befestigt sein.

Mittels des Ventils ist die Auslauföffnung zumindest teilweise absperrbar. Dies bedeutet insbesondere, dass mittels des Ventils ein Ausfließen des Wassers aus der Auslauföffnung verhinderbar oder drosselbar ist. Das Ventil kann zudem nach Art eines Mischventils oder einer Mischkartusche ausgebildet sein. Mit dem Mischventil oder der Mischkartusche ist insbesondere Kaltwasser mit einer Kaltwassertemperatur und Warmwasser mit einer Warmwassertemperatur zu einem Mischwasser mit einer gewünschten Mischwassertemperatur mischbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Ventil ist zumindest teilweise in dem Ventiladapter und/oder einem Aufnahmeraum des Ventiladapters angeordnet oder befestigt. Zudem kann das Ventil mittels eines Hebels der Sanitärarmatur betätigbar sein. Beispielsweise kann mittels des Hebels die Mischwassertemperatur und/oder eine Abgabemenge des Mischwassers oder Wassers einstellbar sein. Das Mischventil oder die Mischkartusche können beispielsweise nach Art eines Einhebelmischers und/oder zumindest teilweise zylinderförmig ausgebildet sein. Ferner kann das Ventil ein Kartuschengehäuse aufweisen.

Weiterhin umfasst die Sanitärarmatur ein Verbindungselement zum Verbinden einer in dem Auslauf angeordneten Wasserführung mit einer Wasseröffnung des Ventiladapters. Bei der Wasserführung kann es sich um eine Mischwasserführung handeln. Das durch das Ventil strömende Wasser oder das durch das Ventil gemischte Mischwasser strömt insbesondere aus einem Wasserauslass des Ventils in einen Aufnahmeraum des Ventiladapters und von dort durch die Wasseröffnung des Ventiladapters über das Verbindungselement in die Wasserführung des Auslaufs. Hierzu kann in dem Verbindungselement ein Wasserkanal ausgebildet sein. Die Wasserführung kann beispielsweise als Rohr oder (flexibler) Schlauch ausgebildet sein und/oder erstreckt sich durch den Auslauf zu der Auslauföffnung. Das Verbindungselement kann zumindest teilweise aus Messing oder Kunststoff bestehen.

Weiterhin ist das Verbindungselement mittels einer Lineargleitführung an dem Ventiladapter befestigt. Durch die Lineargleitführung ist das Verbindungselement an dem Ventiladapter (nur) linear, insbesondere in einer Längsrichtung, d. h. insbesondere parallel zu der Längsachse des Ventiladapters, (gleitend) bewegbar bzw. verschiebbar. Weiterhin ist das Verbindungselement durch die Lineargleitführung insbesondere nur durch eine Bewegung in der Längsrichtung von dem Ventiladapter lösbar. Die Lineargleitführung kann durch eine Leiste des Ventiladapters, die in eine Lagernut des Verbindungselements eingreift und die in der Lagernut (nur) linear, d. h. in einer (einzigen) Richtung (vor und zurück), bewegbar ist, gebildet sein. Die Leiste und die Lagernut sind dabei insbesondere derart ausgebildet, dass der Ventiladapter und das Verbindungselement insbesondere in einer radialen Richtung des Ventiladapters, d. h. insbesondere orthogonal zu der Längsrichtung, formschlüssig miteinander verbunden sind. Hierzu können die Leiste und/oder die Lagernut zumindest teilweise einen trapezförmigen Querschnitt aufweisen.

Die Lineargleitführung ermöglicht, zunächst das Verbindungselement (ohne den Ventiladapter) zumindest teilweise im Auslauf anzuordnen und erst anschließend den Ventiladapter in das Armaturengehäuse einzusetzen. Beim Einsetzen des Ventiladapters in das Armaturengehäuse kann die Leiste in die Lagernut des Verbindungselements eingreifen, sodass das Verbindungselement an dem Ventiladapter befestigt und in seiner Position im Auslauf fixiert ist. Im Bereich der Wasseröffnung des Ventiladapters kann eine Dichtung, beispielsweise nach Art eines O-Rings, angeordnet sein, die beim Einführen der Leiste in die Lagernut zwischen dem Ventiladapter und dem Verbindungselement verpresst wird. Die durch die Verpressung der Dichtung erzeugte Reaktionskraft wird nicht von dem gesamten Durchmesser des Ventiladapters, sondern nur im Bereich der Lineargleitführung übertragen, wodurch eine Deformation des Ventiladapters vermeidbar ist. Durch Befestigung des Verbindungselements an dem Ventiladapter mittels der Lineargleitführung kann eine Vergrößerung des Gehäusedurchmessers des Armaturengehäuses und/oder eine mehrteilige Ausführung des Armaturengehäuses vermieden werden.

Das Verbindungselement kann mittels der Lineargleitführung an einer äußeren Umfangsfläche des Ventiladapters befestigt sein.

Die Lineargleitführung kann als Schwalbenschwanzführung ausgebildet sein.

Das Verbindungselement kann eine Schwalbenschwanznut aufweisen. In diesem Fall ist die Lagernut als Schwalbenschwanznut mit einem zumindest teilweise schwalbenschwanzförmigen Querschnitt ausgebildet. Weiterhin kann auch die Leiste des Ventiladapters zumindest teilweise einen schwalbenschwanzförmigen Querschnitt aufweisen. Durch den schwalbenschwanzförmigen Querschnitt der Leiste und der Schwalbenschwanznut ist die Leiste in der Schwalbenschwanznut nur in einer Richtung bewegbar.

Das Verbindungselement kann einen Rohrabschnitt aufweisen. Der Rohrabschnitt ist insbesondere rohrförmig ausgebildet und erstreckt sich von einem ersten längsseitigen Ende zu einem zweiten längsseitigen Ende.

Das Verbindungselement kann einen Verbindungsabschnitt aufweisen. Der Verbindungsabschnitt ist insbesondere an dem zweiten längsseitigen Ende des Rohrabschnitts und/oder nach Art eines Flanschs ausgebildet. Die Lagernut bzw. die Schwalbenschwanznut ist insbesondere an dem Verbindungsabschnitt des Verbindungselements ausgebildet.

Zwischen dem Verbindungselement und dem Ventiladapter kann eine Dichtung angeordnet sein. Die Dichtung kann insbesondere nach Art eines O-Rings ausgebildet sein.

Die Wasserführung kann in das Verbindungselement eingesteckt sein. Insbesondere ist die Wasserführung durch die Auslauföffnung in das Verbindungselement bzw. in das erste längsseitige Ende des Rohrabschnitts des Verbindungselements einsteckbar.

Das Verbindungselement kann zumindest teilweise in dem Auslauf angeordnet sein.

Einem weiteren Aspekt folgend wird auch ein Verfahren zur Montage einer Sanitärarmatur angegeben, das zumindest die folgenden Schritte umfasst:
a) Bereitstellen eines Armaturengehäuses mit einem eine Auslauföffnung aufweisenden Auslauf;
b) Anordnen eines Verbindungselements zum Verbinden einer in dem Auslauf angeordneten Wasserführung mit einer Wasseröffnung eines Ventiladapters zumindest teilweise in dem Auslauf; und
c) Anordnen des Ventiladapters in dem Armaturengehäuse, sodass das Verbindungselement mittels einer Lineargleitführung an dem Ventiladapter befestigt ist.

Nach dem Bereitstellen des Armaturengehäuses in Schritt a) wird in einem Schritt b) das Verbindungselement, insbesondere mit seinem Rohrabschnitt, in dem Auslauf angeordnet und eine Lagernut des Verbindungselements senkrecht bzw. in einer Längsrichtung eines Ventiladapters ausgerichtet. Anschließend wird in einem Schritt c) der Ventiladapter insbesondere über eine Kartuschenöffnung des Armaturengehäuses in das Armaturengehäuse eingesteckt. Hierbei wird eine Leiste des Ventiladapters in die Lagernut des Verbindungselements eingeführt, sodass die Leiste und die Lagernut eine Lineargleitführung bilden. Durch die Lineargleitführung wird das Verbindungselement an dem Ventiladapter befestigt und in seiner Position in dem Auslauf fixiert. Für weitere Einzelheiten kann auf die Beschreibung der hier vorgeschlagenen Sanitärarmatur vollumfänglich zurückgegriffen werden.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Sanitärarmatur in einer Explosionsdarstellung;
- Fig. 2:: ein Verbindungselement der Sanitärarmatur in einer perspektivischen Darstellung; und
- Fig. 3:: ein Ventiladapter der Sanitärarmatur in einer perspektivischen Darstellung.

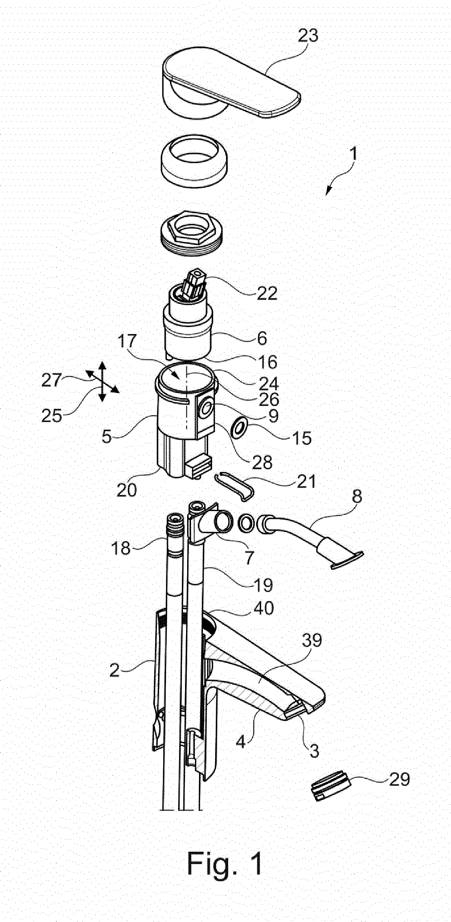

Die Fig. 1 zeigt eine Sanitärarmatur 1 in einer Explosionsdarstellung. Die Sanitärarmatur 1 weist ein Armaturengehäuse 2 mit einem eine Auslauföffnung 3 aufweisenden Auslauf 4 auf. In dem Armaturengehäuse 2 ist ein Ventiladapter 5 angeordnet, der zur Aufnahme eines Ventils 6 einen Aufnahmeraum 17 aufweist und der nach Art eines Kartuschenadapters ausgebildet ist. Das Ventil 6 ist hier nach Art einer Mischkartusche ausgebildet. Der Aufnahmeraum 17 erstreckt sich in einer Längsrichtung 25, d. h. parallel zu einer Längsachse 26 des Ventiladapters 5, von einer oberen Stirnfläche 24 des Ventiladapters 5 bis zu einem hier nicht sichtbaren Boden des Aufnahmeraums 17 innerhalb des Ventiladapters 5. Der Ventiladapter 5 ist im Bereich des Aufnahmeraums 17 rohrförmig ausgebildet. Das Ventil 6 weist eine untere Stirnfläche 16 auf, mit der das Ventil 6 auf dem Boden des Aufnahmeraums 17 des Ventiladapters 5 sitzt. In dem Ventiladapter 5 sind ein hier ebenfalls nicht zu erkennender Kaltwasserkanal und Warmwasserkanal ausgebildet, die sich von einer Unterseite 20 des Ventiladapters 5 bis zu dem Boden des Aufnahmeraums 17 erstrecken. Eine Kaltwasserleitung 18 ist an der Unterseite 20 des Ventiladapters 5 mit dem Kaltwasserkanal und eine Warmwasserleitung 19 an der Unterseite 20 des Ventiladapters 5 mit dem Warmwasserkanal verbindbar. Weiterhin sind die Kaltwasserleitung 18 und die Warmwasserleitung 19 mit einer in den Ventiladapter 5 einsteckbaren Klammer 21 sicherbar, sodass sich die Kaltwasserleitung 18 nicht aus dem Kaltwasserkanal und die Warmwasserleitung 19 nicht aus dem Warmwasserkanal des Ventiladapters 5 lösen kann. Der Kaltwasserkanal und der Warmwasserkanal des Ventiladapters 5 münden an dem Boden des Aufnahmeraums 17 in einen Kaltwassereingang und Warmwassereingang des Ventils 6. Der Kaltwassereingang und der Warmwassereingang sind an der unteren Stirnfläche 16 des Ventils 6 ausgebildet. Innerhalb des Ventils 6 sind das Kaltwasser und das Warmwasser zu einem Mischwasser mit einer gewünschten Mischwassertemperatur mischbar. Zur Einstellung der Mischwassertemperatur und einer Abgabemenge des Mischwassers durch die Sanitärarmatur 1 weist das Ventil 6 ein Betätigungselement 22 auf, das mit einem Hebel 23 verbunden ist.

Das durch das Ventil 6 gemischte Mischwasser tritt an der unteren Stirnfläche 16 aus einem hier nicht zu erkennenden Mischwasserauslass des Ventils 6 in den Aufnahmeraum 17 des Ventiladapters 5. Der Aufnahmeraum 17 ist im Bereich der oberen Stirnfläche 24 des Ventiladapters 5 durch das Ventil 6 verschlossen, sodass das Mischwasser den Aufnahmeraum 17 nur über eine Wasseröffnung 9 verlassen kann. Hierzu weist das Ventil 6 von seiner unteren Stirnfläche 16 bis zu der Wasseröffnung 9 einen Außendurchmesser auf, der geringer ist als ein Innendurchmesser des Aufnahmeraums 17, sodass das Mischwasser in der Längsrichtung 25 durch einen durch das Ventil 6 und den Ventiladapter 5 gebildeten Ringspalt bis zu der Wasseröffnung 9 fließen kann. Die Wasseröffnung 9 ist in der Längsrichtung 25 im Bereich des Ventils 6 ausgebildet und erstreckt sich in einer radialen Richtung 27, d. h. orthogonal zu der Längsrichtung 25, durch eine Seitenwand 28 des Ventiladapters 5. Von der Wasseröffnung 9 kann das Mischwasser durch ein Verbindungselement 7 und eine Wasserführung 8 der Auslauföffnung 3 des Auslaufs 4 zugeführt werden. In der Auslauföffnung 3 ist ein Mousseur 29 angeordnet, durch den das Mischwasser den Auslauf 4 verlässt.

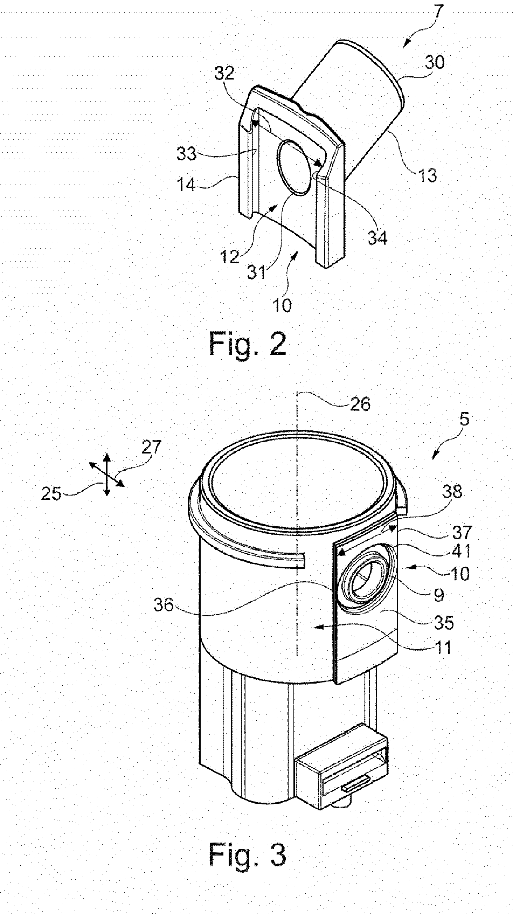

Die Fig. 2 zeigt das Verbindungselement 7 in einer perspektivischen Darstellung. Das Verbindungselement 7 weist einen Rohrabschnitt 13 auf, der sich von einem ersten längsseitigen Ende 30 bis zu einem zweiten längsseitigen Ende 31 erstreckt. In das erste längsseitige Ende 30 ist die in der Fig. 1 gezeigte Wasserführung 8 einsteckbar. An dem zweiten längsseitigen Ende 31 des Rohrabschnitts 13 schließt sich ein Verbindungsabschnitt 14 des Verbindungselements 7 an, der hier nach Art eines Flanschs ausgebildet ist. Der Verbindungsabschnitt 14 umfasst eine Schwalbenschwanznut 12 mit einer ersten Seitenfläche 33 und einer zweiten Seitenfläche 34, die spiegelsymmetrisch zueinander ausgebildet sind und parallel zueinander verlaufen. Weiterhin weist die Schwalbenschwanznut 12 eine erste Breite 32 auf, die in Richtung des ersten längsseitigen Endes 30 (zumindest bereichsweise) zunimmt. Somit weist die Schwalbenschwanznut 12 einen (im Wesentlichen) trapezförmigen bzw. schwalbenschwanzförmigen Querschnitt auf.

Die Fig. 3 zeigt den Ventiladapter 5 in einer perspektivischen Darstellung. An einer äußeren Umfangsfläche 11 des Ventiladapters 5 ist im Bereich der Wasseröffnung 9 eine Leiste 35 ausgebildet. Die Leiste 35 erhebt sich in der radialen Richtung 27 aus der äußeren Umfangsfläche 11 hervor. Zudem weist die Leiste 35 eine erste Seitenflanke 36 und eine zweite Seitenflanke 37 auf, die sich in der Längsrichtung 25 bzw. parallel zu der Längsachse 26 erstrecken und spiegelsymmetrisch zueinander ausgebildet sind. Zwischen der ersten Seitenflanke 36 und zweiten Seitenflanke 37 weist die Leiste 35 eine zweite Breite 38 auf, die sich in der radialen Richtung 27 nach außen vergrößert. Hierdurch weist die Leiste 35 ebenfalls einen (im Wesentlichen) trapezförmigen bzw. schwalbenschwanzförmigen Querschnitt auf. Die Leiste 35 ist derart ausgebildet, dass sie in der Längsrichtung 25 bzw. parallel zu der Längsachse 26 in der in der Fig. 2 gezeigten Schwalbenschwanznut 12 des Verbindungselements 7 gleiten kann. Weiterhin ist die Leiste 35 derart ausgebildet, dass sie (vollständig) nur in der Längsrichtung 25 in die Schwalbenschwanznut 12 des Verbindungselements 7 eingeführt werden kann. Die Schwalbenschwanznut 12 des Verbindungselements 7 und die Leiste 35 sind Teil einer Lineargleitführung 10, durch die das Verbindungselement 7 an der äußeren Umfangsfläche 11 des Ventiladapters 5 befestigbar ist. Befindet sich die Leiste 35 in der Schwalbenschwanznut 12 des Verbindungselements 7, ist das Verbindungselement 7 in der radialen Richtung 27 formschlüssig mit dem Ventiladapter 5 verbunden und von dem Ventiladapter 5 nur in der Längsrichtung 25 lösbar. Um die Wasseröffnung 9 ist in der Leiste 35 eine ringförmigen Nut 41 für eine in der Fig. 1 gezeigte Dichtung 15 ausgebildet, bei der es sich um einen O-Ring handelt.

Bei der Montage der in der Fig. 1 gezeigten Sanitärarmatur 1 wird in einem Schritt a) zunächst das Armaturengehäuse 2 bereitgestellt. Anschließend wird in einem Schritt b) das Verbindungselement 7 mit seinem in der Fig. 2 gezeigten Rohrabschnitt 13 derart in einen Führungskanal 39 des Auslaufs 4 gesteckt, dass die Schwalbenschwanznut 12 des Verbindungselements 7 in der Längsrichtung 25 bzw. senkrecht ausgerichtet ist. Danach wird in einem Schritt c) der Ventiladapter 5 durch eine Kartuschenöffnung 40 des Armaturengehäuses 2 in das Armaturengehäuse 2 gesteckt, sodass die Leiste 35 des Ventiladapters 5 in die Schwalbenschwanznut 12 des Verbindungselements 7 eingeführt wird. Hierdurch wird das Verbindungselement 7 mittels der durch die Schwalbenschwanznut 12 und der Leiste 35 ausgebildeten Lineargleitführung 10 an dem Ventiladapter 5 befestigt und in dem Führungskanal 39 des Auslaufs 4 fixiert. Nach Schritt c) ist die Dichtung 15 zwischen dem Ventiladapter 5 und dem Verbindungselement 7 in der Nut 41 verpresst. Anschließend kann in einem Schritt d) die Wasserführung 8 über die Auslauföffnung durch den Führungskanal 39 in den Rohrabschnitt 13 des Verbindungselements 7 gesteckt werden, sodass der Mischwasserauslass des Ventils 6 flüssigkeitsleitend mit der Auslauföffnung 3 des Auslaufs verbunden ist, ohne dass das Mischwasser mit dem Armaturengehäuse 2 bzw. dem Auslauf 3 in Kontakt kommt.

Durch die vorliegende Erfindung ist eine Wasserführung eines Auslaufs mit einer Wasseröffnung eines Ventiladapters ohne Vergrößerung eines Gehäusedurchmessers eines Armaturengehäuses oder eine mehrteilige Ausbildung des Armaturengehäuses verbindbar.

### Bezugszeichenliste

- 1: Sanitärarmatur
- 2: Armaturengehäuse
- 3: Auslauföffnung
- 4: Auslauf
- 5: Ventiladapter
- 6: Ventil
- 7: Verbindungselement
- 8: Wasserführung
- 9: Wasseröffnung
- 10: Lineargleitführung
- 11: äußere Umfangsfläche
- 12: Schwalbenschwanznut
- 13: Rohrabschnitt
- 14: Verbindungsabschnitt
- 15: Dichtung
- 16: untere Stirnfläche
- 17: Aufnahmeraum
- 18: Kaltwasserleitung
- 19: Warmwasserleitung
- 20: Unterseite
- 21: Klammer
- 22: Betätigungselement
- 23: Hebel
- 24: obere Stirnfläche
- 25: Längsrichtung
- 26: Längsachse
- 27: radiale Richtung
- 28: Seitenwand
- 29: Mousseur
- 30: erstes längsseitiges Ende
- 31: zweites längsseitiges Ende
- 32: erste Breite
- 33: erste Seitenfläche
- 34: zweite Seitenfläche
- 35: Leiste
- 36: erste Seitenflanke
- 37: zweite Seitenflanke
- 38: zweite Breite
- 39: Führungskanal
- 40: Kartuschenöffnung
- 41: Nut

## Patentansprüche

1. Sanitärarmatur (1), zumindest aufweisend:
- ein Armaturengehäuse (2) mit einem eine Auslauföffnung (3) aufweisenden Auslauf (4);
- einen Ventiladapter (5), der in dem Armaturengehäuse (2) angeordnet ist;
- ein Ventil (6) zum zumindest teilweisen Absperren der Auslauföffnung (3), das zumindest teilweise in dem Ventiladapter (5) angeordnet ist; und
- ein Verbindungselement (7) zum Verbinden einer in dem Auslauf (4) angeordneten Wasserführung (8) mit einer Wasseröffnung (9) des Ventiladapters (5), wobei das Verbindungselement (7) mittels einer Lineargleitführung (10) an dem Ventiladapter (5) befestigt ist, **dadurch gekennzeichnet, dass** das Verbindungselement (7) einen Rohrabschnitt (13) aufweist.

2. Sanitärarmatur (1) nach Patentanspruch 1, wobei das Verbindungselement (7) mittels der Lineargleitführung (10) an einer äußeren Umfangsfläche (11) des Ventiladapters (5) befestigt ist.

3. Sanitärarmatur (1) nach einem der vorhergehenden Patentansprüche, wobei die Lineargleitführung (10) als Schwalbenschwanzführung ausgebildet ist.

4. Sanitärarmatur (1) nach einem der vorhergehenden Patentansprüche, wobei das Verbindungselement (7) eine Schwalbenschwanznut (12) aufweist.

5. Sanitärarmatur (1) nach einem der vorhergehenden Patentansprüche, wobei das Verbindungselement (7) einen Verbindungsabschnitt (14) aufweist.

6. Sanitärarmatur (1) nach einem der vorhergehenden Patentansprüche, wobei zwischen dem Verbindungselement (7) und dem Ventiladapter (5) eine Dichtung (15) angeordnet ist.

7. Sanitärarmatur (1) nach einem der vorhergehenden Patentansprüche, wobei die Wasserführung (8) in das Verbindungselement (7) eingesteckt ist.

8. Sanitärarmatur (1) nach einem der vorhergehenden Patentansprüche, wobei das Verbindungselement (7) zumindest teilweise in dem Auslauf (4) angeordnet ist.

9. Verfahren zur Montage einer Sanitärarmatur (1) nach einem der vorhergehenden Patentansprüche, aufweisend zumindest die folgenden Schritte:
a) Bereitstellen eines Armaturengehäuses (2) mit einem eine Auslauföffnung (3) aufweisenden Auslauf (4);
b) Anordnen eines Verbindungselements (7) zum Verbinden einer in dem Auslauf (4) angeordneten Wasserführung (8) mit einer Wasseröffnung (9) eines Ventiladapters (5) zumindest teilweise in dem Auslauf (4); und
c) Anordnen des Ventiladapters (5) in dem Armaturengehäuse (2), sodass das Verbindungselement (7) mittels einer Lineargleitführung (10) an dem Ventiladapter (5) befestigt ist.

## Claims

1. A sanitary fitting (1), comprising at least:
- a fitting housing (2) with an outlet (4) having an outlet opening (3);
- a valve adapter (5) arranged in the fitting housing (2);
- a valve (6) for at least partially shutting off the outlet opening (3), which is arranged at least partially in the valve adapter (5); and
- a connection element (7) for connecting a water guide (8) arranged in the outlet (4) to a water aperture (9) of the valve adapter (5), wherein the connection element (7) is secured to the valve adapter (5) by means of a linear slide guide (10), **characterized in that** the connection element (7) has a pipe section (13).

2. The sanitary fitting (1) according to claim 1, wherein the connection element (7) is secured to an outer circumferential surface (11) of the valve adapter (5) by means of the linear slide guide (10).

3. The sanitary fitting (1) according to any one of the preceding claims, wherein the linear slide guide (10) is designed as a dovetail guide.

4. The sanitary fitting (1) according to any one of the preceding claims, wherein the connection element (7) has a dovetail groove (12).

5. The sanitary fitting (1) according to any one of the preceding claims, wherein the connection element (7) has a connection section (14).

6. The sanitary fitting (1) according to any one of the preceding claims, wherein a seal (15) is arranged between the connection element (7) and the valve adapter (5).

7. The sanitary fitting (1) according to any one of the preceding claims, wherein the water guide (8) is inserted into the connection element (7).

8. The sanitary fitting (1) according to any one of the preceding claims, wherein the connection element (7) is arranged at least partially in the outlet (4).

9. A method for assembling a sanitary fitting (1) according to any one of the preceding claims, comprising at least the following steps:
a) providing a fitting housing (2) with an outlet (4) having an outlet opening (3);
b) arranging a connection element (7) for connecting a water guide (8) arranged in the outlet (4) to a water aperture (9) of a valve adapter (5) at least partially in the outlet (4); and
c) arranging the valve adapter (5) in the valve housing (2) so that the connection element (7) is secured to the valve adapter (5) by means of a linear slide guide (10).

## Revendications

1. Robinetterie sanitaire (1), comportant au moins :
- un corps (2) de robinetterie, pourvu d'une évacuation (4) comportant un orifice d'évacuation (3) ;
- un adaptateur (5) de soupape, qui est placé dans le corps (2) de robinetterie ;
- une soupape (6), destinée à obstruer au moins partiellement l'orifice d'évacuation (3), qui est placée au moins partiellement dans l'adaptateur (5) de soupape ; et
- un élément d'assemblage (7), destiné à assembler un conduit d'eau (8) placé dans l'évacuation (4) avec un orifice pour l'eau (9) de l'adaptateur (5) de soupape, l'élément d'assemblage (7) étant fixé au moyen d'un guidage coulissant (10) linéaire sur l'adaptateur (5) de soupape, **caractérisé en ce que** l'élément d'assemblage (7) comporte un tronçon tubulaire (13).

2. Robinetterie sanitaire (1) selon la revendication 1 du brevet, l'élément d'assemblage (7) étant fixé au moyen du guidage coulissant (10) linéaire sur une surface périphérique (11) extérieure de l'adaptateur (5) de soupape.

3. Robinetterie sanitaire (1) selon l'une quelconque des revendications précédentes du brevet, le guidage coulissant (10) linéaire étant conçu sous la forme d'un guidage en queue d'aronde.

4. Robinetterie sanitaire (1) selon l'une quelconque des revendications précédentes du brevet, l'élément d'assemblage (7) comportant une rainure (12) en queue d'aronde.

5. Robinetterie sanitaire (1) selon l'une quelconque des revendications précédentes du brevet, l'élément d'assemblage (7) comportant un tronçon d'assemblage (14) .

6. Robinetterie sanitaire (1) selon l'une quelconque des revendications précédentes du brevet, entre l'élément d'assemblage (7) et l'adaptateur (5) de soupape étant placé un joint (15).

7. Robinetterie sanitaire (1) selon l'une quelconque des revendications précédentes du brevet, le conduit d'eau (8) étant inséré dans l'élément d'assemblage (7).

8. Robinetterie sanitaire (1) selon l'une quelconque des revendications précédentes du brevet, l'élément d'assemblage (7) étant placé au moins en partie dans l'évacuation (4).

9. Procédé, destiné à monter une robinetterie sanitaire (1) selon l'une quelconque des revendications précédentes du brevet, comportant au moins les étapes suivantes, consistant à :
a) mettre à disposition un corps (2) de robinetterie pourvu d'une évacuation (4) comportant un orifice d'évacuation (3) ;
b) placer un élément d'assemblage (7), destiné à assembler un conduit d'eau (8) placé dans l'évacuation (4) avec un orifice pour l'eau (9) d'un adaptateur (5) de soupape au moins en partie dans l'évacuation (4) ;
c) placer l'adaptateur (5) de soupape dans le corps (2) de robinetterie, de telle sorte que l'élément d'assemblage (7) soit fixé au moyen d'un guidage coulissant (10) linéaire sur l'adaptateur (5) de soupape.
